(19) **Europäisches Patentamt**
**European Patent Office**
**Office européen des brevets**

(11) **EP 4 164 173 B1**

(12) **EUROPEAN PATENT SPECIFICATION**

(45) Date of publication and mention
of the grant of the patent:
**28.05.2025 Bulletin 2025/22**

(21) Application number: **21201360.1**

(22) Date of filing: **07.10.2021**

(51) International Patent Classification (IPC):
***H04L 9/32*** (2006.01)

(52) Cooperative Patent Classification (CPC):
**H04L 9/3236; G06F 21/10; H04L 9/3247**

(54) **SIGNED VIDEO DATA WITH SALTED HASHES**

SIGNIERTE VIDEODATEN MIT GESALZENEN HASHS

DONNÉES VIDÉO SIGNÉES AVEC HACHAGE SALÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.04.2023 Bulletin 2023/15**

(73) Proprietor: **Axis AB
223 69 Lund (SE)**

(72) Inventors:
• **Völcker, Björn
223 69 LUND (SE)**
• **Lundberg, Stefan
223 69 LUND (SE)**

(74) Representative: **AWA Sweden AB
Box 5117
200 71 Malmö (SE)**

(56) References cited:
WO-A1-00/64094          WO-A1-2017/202451
CN-A- 113 158 248       US-A1- 2011 200 224
US-A1- 2014 010 366

**Description**

## TECHNICAL FIELD

The present disclosure relates to the field of security arrangements for protecting programs or data against unauthorized activity. In particular, it proposes methods and devices for signing video data.

## BACKGROUND

In the field of secure digital communication, it is known to use so-called salts to stop unauthorized parties from guessing a repeatedly used password based on hashes of that password. Salts, sometimes referred to as cryptographic salts, have also been used to prevent hash collisions, i.e., the unusual condition where the hashing of separate data items produce identical results. A hash collision could not only disrupt system-internal procedures but may as well expose the system to attacks.

For example, US10728023B2 discloses a method for implementing a hash function with content-based salt. The method includes: identifying a data block $B$ of a given size; dividing the data block into $x$ segments; selecting $y$ bytes from each of the segments, totaling $y_{total}$ bytes; performing a bitwise AND/OR operation on z bytes of the $y_{total}$ bytes, whereby a salt for the data block $S(B)$ is obtained; calculating a hash value $h(B)$ of the data block; calculating a hash value $h(h(B) * S(B))$ of a concatenation of the hash value and the salt, which produces a unique fingerprint by which the data block $B$ can be identified. Here, y, the number of bytes selected, is a function of a number of computations determined to avoid producing the same hash for two different data blocks.

CN113158248A discloses a method for safe storage of video data, in which a data hash value is computed for a combination of a data record, a time stamp and an operation sequence number. From the hash value, a signature is generated using a private key, which belongs to a key pair that further comprises a public key. These elements are sent to a server, which after successful verification stores the data record, time stamp, operation serial number, the public key and the signature.

US20140010366A1 discloses a method for cryptographic video verification, in which each video frame's data is extended with a timestamp before being hashed. The hash of the extended video frame is included in a document, which is cryptographically signed.

WO0064094A1 discloses a method for inserting a digital signature into digital data, and video data in particular. According to one disclosed embodiment, the digital signature is salted with a timestamp assigned by a trusted third party. The timestamp relates to the time of timestamping, not the time of acquiring the digital data. In this embodiment, the digital data is hashed and signed and then combined with the timestamp, and the resulting combination is hashed and encrypted.

US2011200224A1 discloses a method of providing a content item identifier, comprising: generating a first identifier of a content item based on at least part of a baseband level representation of the content item; generating a second identifier of the content item based on at least part of an encoded representation of the content item; and generating a message comprising the first identifier and the second identifier. The content item may be a video item, wherein the baseband level representation comprises raw video.

WO2017202451A1 discloses a method of providing a secure electronic signature by first sampling a biometric signature, including time and coordinates, and thereafter making a set of polynomials based on the sampling. Thereafter a hash calculation is conducted on the data to be signed, which is salted with data based on the polynomials from the sampling. Finally, the salted hash is encrypted by a private key from a qualified certificate, which is stored in connection with the signed data, hash method and public key, to enable a validation of the signature.

The available techniques for modifying hashes with a content-based salt are poorly suited for the digital signing of video data, especially data encoding live video streams.

## SUMMARY

One objective of the present disclosure is to make available methods and devices for signing (digitally signing) video data with a mechanism that protects against a scenario where an unauthorized party identifies, based on past signatures, a secret function that is used in the signing process. This is particularly desirable when the secret function includes a hash function, namely, in view of the limited number of available hash functions with a proven ability to resist attacks. It is a further object to propose such methods and devices that produce digital signatures that can be verified in parallel with a running process of continuously decoding a stream of video data, such as a live video stream. It is a particular objective to propose computationally efficient signing techniques with these characteristics.

At least some of these objectives are achieved by the invention as defined by the independent claims. The dependent claims relate to advantageous embodiments of the invention.

In a first aspect of the invention, there is provided a method of signing video data, comprising: obtaining video data representing a video sequence; obtaining a bitstring which has not been extracted from the video data; generating a salt by hashing the bitstring; generating a first fingerprint; and providing a signature of the video data, which includes the first fingerprint. The first fingerprint is generated by either hashing a combination of the salt and a first portion of the video data, or by hashing a combination of the salt and a hash of a first portion of the video data.

A recipient of the signed video data can use the signature to validate the authenticity or integrity of the video data, and also to ensure non-repudiation. An unauthorized party, even with knowledge of the first portion of the video data and the first fingerprint generated from this, will have great difficulty guessing what hash function was used, more precisely, because said first portion of the video data (or its hash) is modified by the salt each time. It also stops anyone not in possession of the bitstring from generating new fingerprints, e.g., fingerprints referring to unauthentic video data. Thirdly, because the bitstring is not extracted from the video data, the probability that an identical bitstring appears in the video data is extraordinarily small, such that, for all practical purposes, the bitstring can be considered to be independent of the video data. The use of a salt which is not content-based allows a recipient to complete a verification process without having received the totality of the video data, as may be the case in video streaming applications.

In the present disclosure, "a hash" of a data item $B_1$ includes both a first-order hash $h(B_1)$ and higher-order hashes obtained by recursive hashing. The term covers at least the following examples:

$$h\big(h(B_1)\big) = (h \circ h)(B_1),$$

$$(h \circ \ldots \circ h)(B_1),$$

$$h(\{h(B_1), h(B_2)\}),$$

where $B_2$ is a further data item and $\{\cdot\}$ denotes a data combining operation, such as concatenation. As such, "a hash of a first portion of the video data" includes a first-order hash of said portion as well as a hash of the hash or a hash of a combination of hashes.

In some embodiments, the first portion the video data is the entirety of the video data. In other embodiments, the first portion the video data, together with a second, third and further portions to be fingerprinted, make up the entirety of the video data. In still other embodiments, fingerprinting is only applied to a subset of the video data. Here, for example, the video data may be partitioned into segments and each fingerprint may be generated from a subset of a segment. In these embodiments, the subset is extracted in a pre-agreed manner allowing the extraction to be repeated by a recipient who wishes to verify the signature. Within these embodiments, for instance, the first portion may be a subset of a data structure encoding a first video frame and the second portion may be a subset of a data structure encoding a second video frame, wherein both subsets are extracted according to the same pre-agreed extraction algorithm. With reference to the above-mentioned objective of protecting a secret function from being guessed, it may be appreciated that the secret function includes both the hash function and the subset extraction algorithm. Even if the subset extraction is repeated in an identical manner for the first, second and further portions of video data, each resulting fingerprint will be modified by the salt in such manner that an attacker is faced with a computationally highly complex inversion problem. Preferably, the subset occupies such large percentage of the video data - or is sufficiently distributed across the video data - that it can be ensured with high confidence that the received video data has not been manipulated by unauthorized parties.

As mentioned, the method may further include generating a second fingerprint on the basis of a second portion of the video data and the salt that was previously generated from the bitstring. Like the first fingerprint, the second fingerprint can be generated by either hashing a combination of the salt and the second portion of the video data, or by hashing a combination of the salt and a hash of the second portion of the video data. Advantageously, the hash function which is used to generate the fingerprints remains protected from easy guessing even if the same salt is used for both fingerprints. The salt may be conveniently cached in a memory for the time elapsing between the generating of the first and second fingerprints. In connection with the present embodiment, the first and second portions of the video data may represent (e.g., they may encode) respective time segments of the video sequence. The time segments may constitute frames of the video sequence. Alternatively, the time segments may constitute respective groups of pictures (GOPs) of the video sequence, wherein a GOP is defined as an independently decodable segment. To the extent a GOP contains unidirectionally (forward) predicted frames or bidirectionally predicted frames, these can be decoded without relying on frames outside the GOP. The time segments can be disjoint, overlapping or partially overlapping. For the avoidance of doubt, the preferred option is to use, as said first, second etc. portions of video data, data that encodes respective video frames or respective GOPs, not the plaintext video frames or plaintext GOPs.

In one embodiment, the salt is generated using a first hash function and the first (second, third etc.) fingerprints are generated using a second, different hash function. The first hash function is maintained secret. To achieve this, the method includes sharing a definition of the first hash function with a recipient of the signed video data over a private communication path. This allows the recipient to verify the signature of the video data by repeating the operations. Even if the definition of the hash function is shared over a private communication path, according to this embodiment, the signature and/or video data can be transmitted over an arbitrary communication path without significant detriment to the safety of the signing arrangement. A private communication path may refer to a digital transmission path such that unauthorized eavesdropping is extremely difficult or easily discoverable, or both. Encrypted communication and communication subject to two-channel authorization are examples of private communication paths of this type. Moreover, the definition of the hash function may be shared in embedded form, by granting the recipient access to software which is configured in view of the hash function used; the software may for instance be a video decoding application or a signature verification application. This way, the definition of the hash function is put to the recipient's service without being inspectable in plaintext. A still further option is to deposit the definition of the hash function in a safe memory space of some equipment, to which the owner of the equipment controls access exclusively. The equipment may be, for example, a digital video camera which is used to record the video data. The safe memory space may be physically located in removable media, such as a chip or chipset (e.g., a Trusted Platform Module, TPM, or a Secure Element, SE), of which the sender and recipient holds one copy each. An increased confidence level may be achieved if the definition of the hash function is split into two parts held by different users on the recipient side, who are then required to cooperate in order to verify the signature.

In one embodiment, the bitstring from which the salt is generated includes reproducible information relating to the acquisition of the video sequence. The information shall be reproducible in the sense that an intended recipient is able to obtain the bitstring without assistance from the signer who provided the signature of the video data. Alternatively, according to a further embodiment, at least part of the bitstring is extracted from metadata associated with the video data. In a still further embodiment, the signature of the video includes the bitstring in plaintext. This does not necessarily represent a vulnerability, especially if the hash function (first hash function) by which the salt was generated is maintained secret between the signer and recipient.

In another embodiment, the bitstring from which the salt is generated is selected by the sender who then inserts information from which the bitstring is derivable into metadata associated with the video data. For example, the bitstring may be an integer $M$ with the prime factorization $M = p_1^{q_1} p_2^{q_2} \cdots p_t^{q_t}$, and the salt is a hash of a combination of the prime factors $p_1, p_2, \ldots, p_t$.

In some embodiments, the signature of the video data is composed of multiple sub-signatures relating to respective (e.g., consecutive) segments of the video data. This is useful particularly if the video data has a time-sequential structure. The step of providing the signature may then include inserting said sub-signatures into the respective segments of the video data. More specifically, the sub-signatures may be inserted into a video bitstream in the vicinity of (i.e., at or near) the respective time segments, or the sub-signatures may be included in metadata associated with these time segments. Insertion of the sub-signature "at or near" a time segment may be considered to have been achieved if verification of the sub-signature does not perceivably delay or interfere with a decoding operation that runs in parallel to this verification operation, e.g., in a recipient-side video playback application.

In a second aspect of the invention, there is provided a device arranged to perform the above method. Broadly speaking, the second aspect of the invention shares the effects and advantages of the first aspect, and it can be implemented with a corresponding degree of technical variation.

The invention further relates to a computer program containing instructions for causing a computer to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

**BRIEF DESCRIPTION OF THE DRAWINGS**

Aspects and embodiments are now described, by way of example, with reference to the accompanying drawings, on which:

figure 1 is a flowchart of a method for signing video data, according to an embodiment of the invention; and

figure 2 shows a device arranged to perform signing of video data, according to an embodiment of the invention.

**DETAILED DESCRIPTION**

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

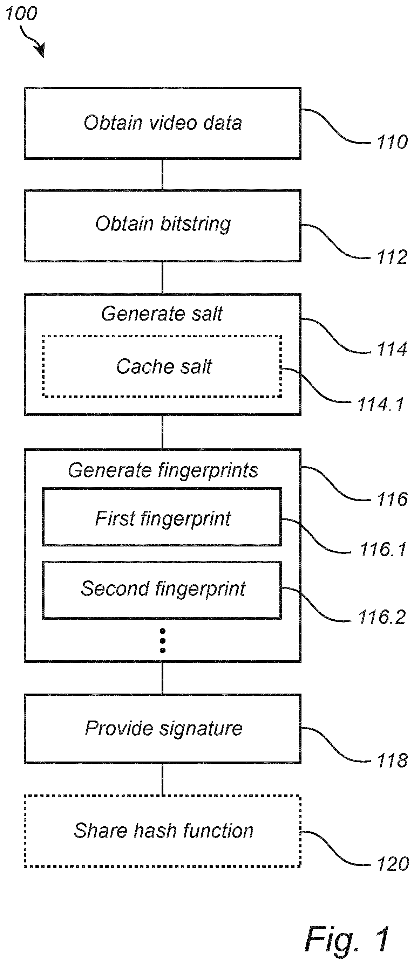

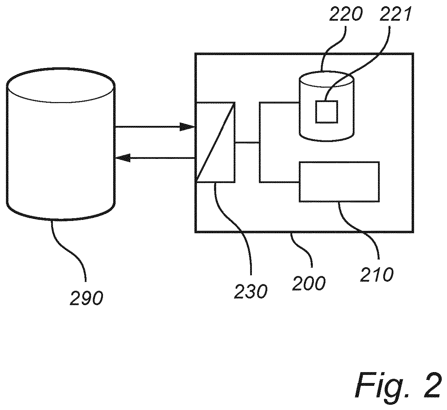

With reference to figure 1, a method 100 of signing video data representing (e.g., encoding) a video sequence will be described. The method 100 is performed by or on behalf of a *signer* and provides a signature which can be verified by a *recipient.* The method 100 may be implemented by a generic programmable computer if suitably arranged, namely, a computer equipped with the relevant input and output interfaces. In particular, the method 100 can be carried out by means of the device 200 depicted in block-diagram form in figure 2. The device 200 comprises processing circuitry 210, a memory 220 and an input-output interface 230 which is adapted for bidirectional communication with an external memory 290 which stores, during some operational phases, the video data to be signed. The device 200 and the external memory 290 may be owned and operated by different entities, as is the case when the signing is provided as an external service, or by a common entity. The (internal) memory 220 of the device 200 may be suitable for storage of a program 221 with software instructions for carrying out the method 100, cryptographic information (e.g., private keys) for generating signatures, variables and cached data used in fingerprinting, as well as logs, configuration files and data supporting various internal housekeeping procedures. The device 200 may be provided as a local computer or server, or it may be implemented in a distributed fashion on the basis of networked (cloud) processing resources. In particular, the device 200 may be integrated in a digital video camera, such as a video camera adapted for monitoring applications, so that the method 100 can be performed on the video data produced by the video data before it is supplied to an external recipient.

In a first step 110 of the method 100, video data representing a video sequence is obtained. The video data may have, but need not have, a definite extent (duration). Rather, the recording of the video sequence may be still in progress; this is frequently the case in streaming applications, including live streaming and video monitoring applications. There exist known decoding processes adapted to process video data which is incomplete in the sense that it can be supplemented by more recent data, one notable example being the techniques described in Recommendation ITU-T H.264 (06/2019) "Advanced video coding for generic audiovisual services", International Telecommunication Union. Similarly, the present method 100 has been conceived out of a desire to let the signature verification proceed in parallel with a decoding process of this type, without delaying or interfering with it. The act of obtaining the video data may include gaining access to a memory where the video data is stored (e.g., the external memory 290 in figure 2), downloading the video data, and/or receiving a transmission with the video data.

In a second step 112, a bitstring $b$, which has not been extracted from the video data, is obtained. The bitstring $b$ is a sequence of binary values. The present method 100 does not presuppose that the bitstring indicates, represents or encodes any information. However, to facilitate the recipient's reproducing of the bitstring, it may include a time, date or location of the acquisition (recording) of the video sequence. The time of acquisition may refer to a beginning or an end. For a live or streaming video sequence, it is envisioned to generate a new salt repeatedly, based on new bitstrings. If, for example, the bitstrings refer to the beginnings of consecutive segments of the recording, a signature will be ready for verification as soon as the acquisition starts, and a high security level can be sustained by letting new salts supersede old ones. Another option is to extract the bitstring from metadata associated with the video data, e.g., file system parameters or file format metadata. A still further option is to *insert,* into such metadata, information from which the bitstring is derivable by a pre-agreed operation.

On the basis of the bitstring $b$, in a third step 114, a salt is generated by hashing the bitstring: $\sigma = h_1(b)$. The hashing is performed by a hash function (or one-way function) $h_1$. It may be a cryptographic hash function that provides a safety level considered adequate in view of the sensitivity of the video data to be signed. Three examples are SHA-256, SHA3-512 and RSA-1024. The hash function $h_1$ shall be predefined (e.g., it shall be reproducible) so that the salt and thereby the fingerprints can be regenerated when the fingerprint is to be verified. In some embodiments, this hash function $h_1$ is maintained as a secret between the signer and the recipient, which may necessitate a safe sharing 120 of a definition of the hash function with the recipient. Such a step 120, which will be described below, can be carried out independently of the further steps of the method 100, at any suitable point in time, before, during or after these.

One realization of the above-mentioned option where information, from which the bitstring is derivable by a pre-agreed operation, is inserted into metadata will now be described. In this realization, said information is an integer $M$ selected by the sender. The selection may be random. The integer is factorizable into prime factors $p_1, p_2, \ldots, p_t$ as

$$M = p_1^{q_1} p_2^{q_2} \cdots p_t^{q_t}$$

, where $q_1, \ldots, q_t \geq 1$. The salt is calculated as a hash of the prime factors combined in ascending, descending or another pre-agreed order, e.g., $\sigma = h_1(\{p_1, p_2, \ldots, p_t\})$ or $\sigma = h_1(\{p_t, p_{t-1}, \ldots, p_1\})$. This allows the recipient to retrieve the integer M from metadata, perform the prime factorization and recompute the salt in order to verify the signature of the video data. It is recalled that prime factorization produces a unique result. It may therefore be a pre-agreed operation in this sense, if used together with the ascending, descending etc. ordering of the resulting factors.

In a fourth step 116 of the method 100, fingerprints $F_1$, $F_2$, ... are generated by hashing video content. For purposes of illustration, it will initially be assumed that the fingerprinting is carried out with the granularity of one video frame. Both finer and coarser granularities are valid alternatives to this, including fingerprinting a predefined image band (macroblock) of consecutive frames, or fingerprinting consecutive groups of pictures (GOPs).

On the one hand, the fourth step 116 may include hashing a combination of the salt $\sigma$ and a first portion $\pi_1$ of the video data:

$$F_1 = h_2(\{\sigma, \pi_1\}),$$

where $h_2$ is a second hash function. The first and second hash functions can be identical, $h_1 = h_2$, or different. The curly brackets notation $\{\cdot\}$ refers to a generic data combination operation, which may include concatenating the data linearly (juxtaposition) or in various staggered arrangements. The combination operation may further include an arithmetic operation on the data, such as bitwise OR, XOR, multiplication, division or a modulo operation. The further fingerprints $F_2$, $F_3$, ... can be computed analogously, namely:

$$F_n = h_2(\{\sigma, \pi_n\}), \qquad n \geq 2.$$

Notably, the preferred option is to not replace the salt $\sigma$. Rather, the salt can be cached 114.1 after the computation of the first fingerprint $F_1$ and retrieved for later use when the second and further fingerprints are to be generated.

On the other hand, the fourth step 116 may include hashing a combination of the salt $\sigma$ and a hash of the first portion $\pi_1$ of the video data. A simple realization is:

$$F_1 = h_2(\{\sigma, h_2(\pi_1)\})$$

A further possible realization uses higher-order hashes:

$$F_1 = h_2(\{\sigma, h_2(h_2(\pi_1))\})$$

According to two still further realizations, which may be particularly suitable for use cases where the available bitrate is restricted, one fingerprint is generated for each GOP. The first realization is to generate the fingerprint of the GOP on the basis of a hash of a combination of the hashes of all frames $\pi_1$, $\pi_2$, ... , $\pi_N$ in the GOP:

$$F_{GOP1} = h_2(\{\sigma, h_2(\{h_2(\pi_1), h_2(\pi_2), ..., h_2(\pi_N)\})\}).$$

The second realization is to generate the fingerprint of the GOP iteratively:

$$F_1^* = h_2(\{\sigma, h_2(\pi_1)\})$$

$$F_2^* = h_2(\{F_1^*, h_2(\pi_2)\})$$

$$...$$

$$F_{GOP1} = h_2(\{F_{N-1}^*, h_2(\pi_N)\})$$

Here, $F_1^*, ..., F_{N-1}^*$ are temporary variables which may be discarded once the next element in the sequence has been successfully computed. The second realization removes the need to store $h_2(\pi_1)$, $h_2(\pi_2)$, ... , $h_2(\pi_N)$, like in the first realization. The linking of the hashes also protects against unauthorized removal, insertion and reordering of frames within the GOP.

In variations of the above options, the hash function used to carry out the inner hashing operation(s) can be replaced by a third hash function $h_3$, which is different from the second hash function $h_2$ that is used for the outer operation.

A common advantage of this second group of implementations of the fourth step 216 flows from the fact that hashes have a fixed length, which besides is generally much smaller than the data needed to encode one video frame or one GOP. Accordingly, the combining of the salt and the hash of the video data can be effectuated by means of a lightweight memory operation, which incurs a limited computational cost.

In a fifth step 118, a signature of the video data is provided, which includes at least one of the generated fingerprints $F_1$, $F_2$, .... The signature may be formed by collecting the generated fingerprints in a so-called document (a text file or another data structure) and signing the document. The document signature may for example be generated by asymmetric cryptography, i.e., using a private key from a key pair in which the public key has been pre-shared with the recipient such that the recipient is able to verify the signature. Accordingly, the signature of the video sequence may consist of the document and the document signature. Optionally, if the first hash function $h_1$ is kept secret, the bitstring $b$ may be included in the signature.

Another option is to provide 118 a signature which is composed of multiple sub-signatures $S_1$, $S_2$, $S_3$, .... The sub-signatures may relate to consecutive segments - especially time segments - of the video data. If GOP-level signing is applied, the fifth step 118 could include providing, for each GOP, a document which holds the signatures of the frames in the GOP and generating a document signature. Alternatively, according to the low-bitrate option outlined above, the document consists of $F_{GOP1}$. Either way, the step 118 of providing the signature may include inserting said sub-signatures $S_1$, $S_2$, $S_3$, ... into the respective segments of the video data. More specifically, the sub-signatures may be inserted into a video bitstream in the vicinity of the respective time segments, or the sub-signatures may be included in metadata associated with these time segments. Specifically, a GOP-level sub-signature may be included in metadata of the first or last frame of the GOP, or by inserting the sub-signature into the video bitstream in the vicinity of these frames. This may support the so-called intra refresh option in the ITU-T H.264 format.

Optionally, the method 110 may comprise an additional step 120, in which a definition of the first hash function $h_1$, by which the salt $\sigma$ is generated, is shared with a recipient of the signed video data over a private communication path. As already explained, a private communication path may refer to a digital transmission path protected from unauthorized eavesdropping, including encrypted communication and communication subject to two-channel authorization. The definition of the hash function may also be shared in various embedded forms, through decoding software or hardware. The definition of the first hash function $h_1$ may be incomplete and restricted to a particular configuration parameter, it being understood that the first hash function $h_1$ shall have a standardized or otherwise pre-agreed form. The step 120 may be performed before or after the other steps of the method 100, or parallel to these.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Indeed, the method 100 is not limited to coded video data but may as well be performed on uncoded (or plaintext) video data. The method 100 is also applicable to further coded video formats, such as AOMedia Video 1 (AV1) and the format specified in Recommendation ITU-T H.265 (08/2021) "High efficiency video coding".

**Claims**

1. A method (100) of signing video data, the method comprising:

   obtaining (110) video data representing a video sequence;
   obtaining (112) a bitstring not extracted from the video data;
   providing a salt based on the bitstring;
   generating (116.1) a first fingerprint by hashing

   a) a combination of the salt and a first portion of the video data, or
   b) a combination of the salt and a hash of a first portion of the video data;

   providing (118) a signature of the video data, which includes the first fingerprint,
   **characterized in that** the salt is provided by hashing (114) the bitstring, **in that** the salt and the first fingerprint are generated using different hash functions, and **in that** the method further comprises:
   sharing (220), over a private communication path, a definition of the hash function for generating the salt with a recipient of the signed video data.

2. The method of claim 1, further comprising:

   generating (116.2) a second fingerprint by hashing

a) a combination of the salt and a second portion of the video data, or
b) a combination of the salt and a hash of a second portion of the video data,

wherein the signature of the video data further includes the second fingerprint.

3. The method of claim 2, wherein the first and second portions represent respective time segments of the video sequence.

4. The method of claim 3, wherein the first and second portions represent respective frames of the video sequence.

5. The method of claim 3, wherein the first and second portions represent respective independently decodable groups of pictures, GOPs, of the video sequence.

6. The method of any of claims 2 to 5, further comprising:

caching (114.1) the salt,
wherein generating (116.2) the second fingerprint includes using the cached salt.

7. The method of claim 1, wherein the first portion of the video data is all the obtained video data.

8. The method of any of the preceding claims, wherein at least one of the following holds:

the bitstring includes reproducible information relating to the acquisition of the video sequence;
at least part of the bitstring is extracted from metadata associated with the video data;
information, from which the bitstring is uniquely derivable, is inserted into metadata associated with the video data;
the signature of the video data further includes the bitstring.

9. The method of any of the preceding claims, wherein the video sequence is a streaming video sequence.

10. The method of claim 9, wherein the video data has a time-sequential structure, and the signature is composed of multiple sub-signatures relating to respective segments of the video data,
wherein the signature is provided (118) by inserting said sub-signatures into or near the respective segments of the video data.

11. The method of any of the preceding claims, wherein the signature of the video data is included in metadata associated with the video data.

12. The method of any of the preceding claims, wherein the signature of the video data is cryptographically signed.

13. A device (200) comprising processing circuitry (210) arranged to perform the method of any of claims 1 to 12.

14. A computer program (221) comprising instructions which, when the program is executed by a computer, cause the computer to carry out the method of any of claims 1 to 12.


**Patentansprüche**

1. Verfahren (100) zum Signieren von Videodaten, wobei das Verfahren Folgendes umfasst:

Erhalten (110) von Videodaten, die eine Videosequenz darstellen;
Erhalten (112) einer Bitfolge, die nicht aus den Videodaten extrahiert wurde;
Bereitstellen eines Salts basierend auf der Bitfolge;
Generieren (116.1) eines ersten Fingerabdrucks durch Hashing

a) einer Kombination des Salts und eines ersten Abschnitts der Videodaten oder
b) einer Kombination des Salts und eines Hash eines ersten Abschnitts der Videodaten;

Bereitstellen (118) einer Signatur der Videodaten, die den ersten Fingerabdruck aufweist, **dadurch gekennzeichnet, dass** das Salt durch Hashing (114) der Bitfolge bereitgestellt wird, **dass** das Salt und der erste Fingerabdruck unter Verwendung unterschiedlicher Hash-Funktionen generiert werden und **dass** das Verfahren ferner umfasst:

Teilen (220), über einen privaten Kommunikationspfad, einer Definition der Hash-Funktion zum Generieren des Salts mit einem Empfänger der signierten Videodaten.

2. Verfahren nach Anspruch 1, ferner umfassend:
Generieren (116.2) eines zweiten Fingerabdrucks durch Hashing

a) einer Kombination des Salts und eines zweiten Abschnitts der Videodaten oder
b) einer Kombination des Salts und eines Hash eines zweiten Abschnitts der Videodaten, wobei die Signatur der Videodaten ferner den zweiten Fingerabdruck aufweist.

3. Verfahren nach Anspruch 2, wobei der erste und der zweite Abschnitt jeweilige Zeitsegmente der Videosequenz darstellen.

4. Verfahren nach Anspruch 3, wobei der erste und der zweite Abschnitt jeweilige Frames der Videosequenz darstellen.

5. Verfahren nach Anspruch 3, wobei der erste und der zweite Abschnitt jeweilige unabhängig decodierbare Gruppen von Bildern, GOPs, der Videosequenz darstellen.

6. Verfahren nach einem der Ansprüche 2 bis 5, ferner umfassend:

Zwischenspeichern (114.1) des Salts,
wobei das Generieren (116.2) des zweiten Fingerabdrucks das Verwenden des zwischengespeicherten Salts aufweist.

7. Verfahren nach Anspruch 1, wobei der erste Abschnitt der Videodaten alle erhaltenen Videodaten sind.

8. Verfahren nach einem der vorhergehenden Ansprüche, wobei mindestens eines von Folgendem zutrifft:

die Bitfolge weist reproduzierbare Informationen auf, die die Erfassung der Videosequenz betreffen;
mindestens ein Teil der Bitfolge wird aus Metadaten extrahiert, die mit den Videodaten assoziiert sind;
Informationen, aus denen die Bitfolge eindeutig ableitbar ist, werden in Metadaten eingefügt, die mit den Videodaten assoziiert sind;
die Signatur der Videodaten weist ferner die Bitfolge auf.

9. Verfahren nach einem der vorhergehenden Ansprüche, wobei die Videosequenz eine Streaming-Videosequenz ist.

10. Verfahren nach Anspruch 9, wobei die Videodaten eine zeitsequenzielle Struktur aufweisen und die Signatur aus mehreren Untersignaturen besteht, die sich auf jeweilige Segmente der Videodaten beziehen,
wobei die Signatur durch Einfügen der Untersignaturen in die oder nahe den jeweiligen Segmenten der Videodaten bereitgestellt (118) wird.

11. Verfahren nach einem der vorhergehenden Ansprüche, wobei die Signatur der Videodaten in Metadaten enthalten ist, die mit den Videodaten assoziiert sind.

12. Verfahren nach einem der vorhergehenden Ansprüche, wobei die Signatur der Videodaten kryptografisch signiert ist.

13. Vorrichtung (200), umfassend eine Verarbeitungsbeschaltung (210), die angeordnet ist, um das Verfahren nach einem der Ansprüche 1 bis 12 durchzuführen.

14. Computerprogramm (221), umfassend Anweisungen, die, wenn das Programm von einem Computer ausgeführt wird, den Computer veranlassen, das Verfahren nach einem der Ansprüche 1 bis 12 auszuführen.

**Revendications**

1. Procédé (100) de signature de données vidéo, le procédé comprenant :

   l'obtention (110) de données vidéo représentant une séquence vidéo ;
   l'obtention (112) d'une chaîne de bits non extraite des données vidéo ;
   la fourniture d'un sel sur la base de la chaîne de bits ; la génération (116.1) d'une première empreinte digitale par hachage

   a) d'une combinaison du sel et d'une première partie des données vidéo, ou
   b) d'une combinaison du sel et d'un hachage d'une première partie des données vidéo ;

   la fourniture (118) d'une signature des données vidéo, qui comprend la première empreinte digitale, **caractérisé en ce que** le sel est fourni par hachage (114) de la chaîne de bits, **en ce que** le sel et la première empreinte digitale sont générés à l'aide de fonctions de hachage différentes, et **en ce que** le procédé comprend en outre :
   le partage (220), sur un trajet de communication privé, d'une définition de la fonction de hachage pour générer le sel avec un destinataire des données vidéo signées.

2. Procédé selon la revendication 1, comprenant en outre :

   la génération (116.2) d'une seconde empreinte digitale par hachage

   a) d'une combinaison du sel et d'une seconde partie des données vidéo, ou
   b) d'une combinaison du sel et d'un hachage d'une seconde partie des données vidéo,

   dans lequel la signature des données vidéo comprend en outre la seconde empreinte digitale.

3. Procédé selon la revendication 2, dans lequel les première et seconde parties représentent des segments temporels respectifs de la séquence vidéo.

4. Procédé selon la revendication 3, dans lequel les première et seconde parties représentent des trames respectives de la séquence vidéo.

5. Procédé selon la revendication 3, dans lequel les première et seconde parties représentent des groupes d'images, GOP, respectifs pouvant être décodés indépendamment de la séquence vidéo.

6. Procédé selon l'une quelconque des revendications 2 à 5, comprenant en outre :

   la mise en mémoire cache (114.1) du sel,
   dans lequel la génération (116.2) de la seconde empreinte digitale comprend l'utilisation du sel mis en mémoire cache.

7. Procédé selon la revendication 1, dans lequel la première partie des données vidéo constitue toutes les données vidéo obtenues.

8. Procédé selon l'une quelconque des revendications précédentes, dans lequel au moins l'un des éléments suivants est vrai :

   la chaîne de bits comprend des informations reproductibles relatives à l'acquisition de la séquence vidéo ;
   au moins une partie de la chaîne de bits est extraite de métadonnées associées aux données vidéo ;
   des informations desquelles la chaîne de bits peut être dérivée de manière unique sont insérées dans des métadonnées associées aux données vidéo ;
   la signature des données vidéo comprend en outre la chaîne de bits.

9. Procédé selon l'une quelconque des revendications précédentes, dans lequel la séquence vidéo est une séquence vidéo de diffusion en continu.

**10.** Procédé selon la revendication 9, dans lequel les données vidéo présentent une structure séquentielle dans le temps, et la signature est constituée de multiples sous-signatures relatives aux segments respectifs des données vidéo, dans lequel la signature est fournie (118) par l'insertion desdites sous-signatures dans ou près des segments respectifs des données vidéo.

**11.** Procédé selon l'une quelconque des revendications précédentes, dans lequel la signature des données vidéo est incluse dans des métadonnées associées aux données vidéo.

**12.** Procédé selon l'une quelconque des revendications précédentes, dans lequel la signature des données vidéo est signée de façon cryptographique.

**13.** Dispositif (200) comprenant des circuits de traitement (210) agencés pour mettre en œuvre le procédé selon l'une quelconque des revendications 1 à 12.

**14.** Programme informatique (221) comprenant des instructions qui, lorsque le programme est exécuté par un ordinateur, amènent l'ordinateur à mettre en œuvre le procédé selon l'une quelconque des revendications 1 à 12.

EP 4 164 173 B1

Fig. 1

12

*Fig. 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10728023 B2
- CN 113158248 A
- US 20140010366 A1
- WO 0064094 A1
- US 2011200224 A1
- WO 2017202451 A1